# FASCICULE DE BREVET EUROPEEN

(11) **EP 3 475 242 B1**
(45) Date de publication et mention de la délivrance du brevet: **20.03.2024**
(21) Numéro de dépôt: 17737001.2
(22) Date de dépôt: 22.06.2017
(51) Int. Cl.: C04B 28/02, C04B 28/06, C04B 28/08, C04B 28/14

(54) **PROCÉDÉ DE FABRICATION DE MATÉRIAUX DE CONSTRUCTION SOUS FORME DE PLAQUES**
VERFAHREN ZUR HERSTELLUNG VON BAUMATERIALEN IN FORM VON PLATTEN
METHOD FOR FORMING CONSTRUCTION MATERIAL IN THE FORM OF BOARDS

(30) Priorité: 23.06.2016 FR 1655870
(43) Date de publication de la demande: 01.05.2019
(73) Titulaire: SAINT-GOBAIN PLACO, 92400 Courbevoie (FR)
(72) Inventeur: YAMMINE-MALESYS, Joumana, 93110 Rosny sous Bois (FR)
(74) Mandataire: Saint-Gobain Recherche
(86) Numéro de dépôt international: PCT/FR2017/051656
(87) Numéro de publication internationale: WO 2017/220935

(56) Documents cités:
- EP-A1- 3 015 438
- WO-A2-2010/130582
- US-A1- 2008 302 276
- US-A1- 2013 263 760
- US-B1- 6 641 658

## Description

La présente invention concerne un procédé de fabrication des matériaux de construction, notamment des plaques, obtenus à partir d'un liant à base de composé solide minéral riche en oxyde alcalino-terreux et d'activateurs phosphatés.

On entend par plaque un produit mince globalement plat, dont la hauteur est faible, comparée aux deux autres dimensions, que la section droite soit rectiligne ou non, par exemple en créneaux, sinusoïdale telle qu'une tôle ondulée, ou autre.

Dans l'objectif de diminuer les quantités de CO₂ rejetées dans l'atmosphère, on cherche aujourd'hui de plus en plus à substituer une partie ou la totalité du ciment Portland utilisé dans la fabrication de matériaux de construction par d'autres liants hydrauliques considérés comme moins polluants. Ainsi on connait des liants hydrauliques dans lesquels une partie ou la totalité du ciment Portland est substitué par des déchets de l'industrie de l'acier ou du charbon tels que les laitiers de hauts fourneaux ou les cendres volantes. Contrairement au ciment Portland, ces composés sont peu hydrauliques par nature et il est nécessaire d'ajouter un activateur pour les dissoudre et les rendre réactifs. Il est connu d'utiliser par exemple des agents alcalins en forte quantité, ou bien dont l'alcalinité est élevée, ce qui présente l'inconvénient d'entraîner de fortes augmentations de pH qui rendent délicate la manipulation de tels liants et risquent de provoquer de fortes irritations.

Il est connu de préparer des plaques à base de ciment, obtenues à partir d'un mélange d'un liant cimentaire, de granulats légers, de granulats inertes, de régulateurs de prise et de fluidifiants. La demande WO 02/098815 porte sur des plaques à base de liant cimentaire comprenant un mélange de ciment Portland, de clinker sulfoalumineux et de plâtre. Ce type de liant se traduit par une microstructure avec un système à dominante ettringitique. Durant leur cycle de vie, les matériaux ettringitiques présentent deux problèmes majeurs: les variations dimensionnelles à haute température (70°C) qui peuvent conduire à la formation de fissures et la perte de durabilité à long terme des matrices ettringitiques. La quantité importante de ciment Portland dans ce liant entraîne un risque de réactivité à long terme du ciment Portland résiduel, et par conséquent un potentiel renforcement de ces problèmes. On cherche par conséquent à développer d'autres types de liants hydrauliques qui permettent de limiter les variations dimensionnelles. Le brevet US 8,916,277 propose l'utilisation d'un liant à base de déchets industriels, tels que des laitiers ou des cendres volantes, et exempt notamment de plâtre et de ciment. Les compositions de liants et systèmes d'activation proposés ne permettent cependant pas de satisfaire les propriétés requises pour permettre une fabrication industrielle de plaques en continu. La demande US 2008/302276 A1 divulgue une plaque, un procédé de sa fabrication et son utilisation, mais non un liant hydraulique comprenant un système d'activation permettant la substitution complète du ciment avec un liant à base de laitier ou de cendres volantes.

La présente invention propose un procédé de fabrication d'une plaque, comprenant :
- a) la préparation d'une gâchée, ladite gâchée comprenant, par rapport au total de matière sèche, 50 à 70 % en poids d'un liant hydraulique, 30 à 60 % en poids de granulats et 0 à 10 % en poids d'adjuvants, et le rapport pondéral eau/liant dans la gâchée étant compris entre 0,2 et 0,5 ;
- b) la mise en forme ou formation du corps de la plaque à partir de ladite gâchée ;
caractérisé en ce que le liant hydraulique comprend :
- 20 à 80 % en poids d'un composé solide minéral constitué d'au moins un mélange de silice, d'alumine et d'oxydes alcalino-terreux, la somme totale de CaO et MgO représentant au moins 10% en poids du composé solide minéral ;
- 5 à 70 % en poids d'un clinker alumineux et/ou sulfoalumineux ;
- 5 à 20 % en poids d'un une source de sulfate de calcium ; et
- 2 à 15 % en poids d'un système d'activation consistant en un mélange de 30 à 70 % en poids d'un sel dérivé de l'acide phosphorique, 10 à 50 % en poids d'un silicate d'un métal alcalin, et 10 à 50 % en poids d'une source de métal alcalinoterreux.

Le système d'activation utilisé dans la présente invention permet de rendre réactifs des composés solides minéraux tels que par exemple des laitiers ou des cendres volantes quelle que soit leur cristallinité. Ainsi un tel système permet d'activer des laitiers amorphes mais également partiellement cristallisés dont les tailles de particules peuvent aller jusqu'à 5 mm. Par ailleurs, la composition du liant proposé dans la présente invention permet d'atteindre un bon compromis entre d'une part les propriétés de la gâchée (ouvrabilité initiale, temps de prise, vitesse de durcissement...), qui doivent être compatibles avec un procédé de fabrication industriel en continu, et d'autre part les propriétés de la plaque (performances mécaniques, densité,...). Ainsi, la composition de liant selon l'invention ne requière que très peu d'eau et présente notamment une prise rapide, inférieure à 20 minutes voire 10 minutes, ainsi qu'un durcissement rapide et élevé, c'est à dire par exemple des propriétés mécaniques de résistance à la compression Rc > 5 MPa à 48 heures. Ladite composition présente un temps de maniabilité, ou d'ouvrabilité, suffisant pour la mise en oeuvre du mélange comprenant ledit liant avant que la prise n'ait lieu.

Le liant du corps de plaque comprend un mélange d'un composé solide minéral, de clinker alumineux et/ou sulfoalumineux, d'une source de sulfate de calcium et d'un système d'activation.

Le liant utilisé dans le procédé selon l'invention ne comprend de préférence pas de ciment ordinaire de type Portland qui est défini comme un ciment comprenant au moins 95% de clinker à base de calcaire et d'argile.

Le liant utilisé dans le procédé selon la présente invention comprend 20 à 80% en poids d'un composé solide minéral constitué d'au moins un mélange de silice, d'alumine et d'oxydes alcalino-terreux, la somme totale de CaO et MgO représentant au moins 10% en poids du composé solide minéral. De façon préférée, la somme totale de CaO et MgO représente au moins 20% du poids du composé minéral solide. Préférentiellement, le dit composé minéral solide est un laitier, amorphe ou cristallisé, des cendres volantes et/ou des poudres de verre. Les laitiers peuvent être des laitiers d'aciérie ou des laitiers de hauts-fourneaux. Les cendres volantes sont préférentiellement des cendres volantes de classe C.

La teneur en composé solide minéral dans le liant peut varier de préférence de 30 à 70 %, voire de 40 à 65% en poids du liant.

Le composé solide minéral présente avantageusement une surface spécifique (Blaine) de 2500 à 6000 cm²/g.

Sous le terme « système d'activation » au sens de la présente invention, on comprend un système comprenant un ou plusieurs composés destinés à améliorer et/ou accélérer la prise et/ou le durcissement du liant, notamment en facilitant la dissolution de ses composants.

Le système d'activation consiste en un mélange de 30 à 70 % en poids d'un sel dérivé de l'acide phosphorique, 10 à 50 % en poids d'un silicate d'un métal alcalin, et 10 à 50 % en poids d'une source de métal alcalinoterreux. Le pourcentage pondéral est donné par rapport au poids total du système d'activation. Le sel dérivé de l'acide phosphorique est de préférence choisi parmi les sels d'orthophosphates, de polyphosphates ou de pyrophosphates dans lequel le cation est choisi parmi le sodium, le potassium, le lithium, le calcium ou l'ion ammonium. Les sels d'orthophosphates sont des sels dérivés de l'acide orthophosphorique comprenant l'anion PO₄³⁻. Les pyrophopshates sont des sels dérivés de l'acide pyrophosphorique comprenant l'anion P₂O₇⁴⁻. Le sel est notamment choisi parmi les polyphosphates de métal alcalin choisi parmi le sodium, le potassium ou le lithium et leurs mélanges. De façon préférée, le sel est un diphosphate ou un triphosphate de métal alcalin. On peut citer par exemple le triphosphate de sodium de formule Na₅P₃O₁₀. Ces sels dérivés de l'acide phosphorique présentent l'avantage d'améliorer les résistances mécaniques du liant.

Pour obtenir de bonnes résistances très rapidement aux jeunes âges, le système d'activation utilisé dans le liant utilisé dans le procédé selon la présente invention comprend donc, en plus du sel dérivé de l'acide phosphorique, un silicate de métal alcalin, de préférence choisi parmi le potassium, le lithium et le sodium, et leurs mélanges. Le silicate de métal alcalin peut être directement introduit sous forme minérale ou sous forme d'un sel. Il peut provenir d'un composé minéral essentiellement riche en silice, comme par exemple des fumées de silice qui, lors de leur mise en solution dans un milieu basique (pH à environ 11), vont se dissoudre et apporter de la silice. Une fumée de silice contient en effet plus de 90% en poids de silice et a une finesse inférieure à 10µm tamis « tout passant » (100% des particules passent au tamis de 10 µm). Il s'agit généralement d'un sous-produit essentiellement amorphe des industries métallurgiques et de la production du ferro-silicium.

Pour améliorer encore la résistance aux jeunes âges le système d'activation comprend également une source de métal alcalinoterreux, notamment une source de calcium. La source de métal alcalinoterreux est de préférence choisie parmi la chaux et les sels de calcium. Le sel de calcium peut être choisi parmi les sels organiques d'acides carboxyliques de calcium comme par exemple le formiate de calcium, l'acétate de calcium, le citrate de calcium, le lactate de calcium, le gluconate de calcium, le tartrate de calcium, l'oxalate de calcium, le propionate de calcium, le stéarate de calcium; les sels inorganiques de calcium comme par exemple le chlorure de calcium, le bromure de calcium, le fluorure de calcium, l'iodure de calcium, le chlorate de calcium, l'iodate de calcium, le phosphate de calcium, le nitrate de calcium, le nitrite de calcium, l'hypochlorure de calcium, le bicarbonate de calcium, le carbonate de calcium, le sulfure de calcium, l'oxyde de calcium, l'hydroxyde de calcium et leurs mélanges. Dans le cadre de la présente invention, on préfère le chlorure de calcium, le nitrate de calcium et/ou l'hydroxyde de calcium.

De façon préférée, le système d'activation consiste en un mélange de 30 à 70 % en poids d'un sel dérivé de l'acide phosphorique choisi parmi les polyphosphates d'un métal alcalin choisi parmi le sodium, le potassium ou le lithium et leurs mélanges, 10 à 50 % en poids d'un silicate de métal alcalin choisi parmi le potassium, le lithium et/ou le sodium, et 10 à 50 % en poids d'une source de métal alcalinoterreux, choisie parmi l'hydroxyde de calcium, le nitrate de calcium, le chlorure de calcium et leurs mélanges.

Le système d'activation représente entre 2 et 15% du poids total du liant hydraulique, de préférence entre 3 et 12% du poids total du liant.

Le liant utilisé dans le procédé selon l'invention contient 5 à 70 % en poids d' un clinker alumineux et/ou sulfoalumineux. Préférentiellement, il comprend un clinker sulfoalumineux.

Par clinker alumineux, il faut comprendre tout matériau résultant de la cuisson à une température comprise entre 900°C et 1450°C ("clinkérisation") de mélanges contenant au moins une source de chaux (par exemple les calcaires qui ont une teneur en CaO variant entre 50 % et 60 %), au moins une source d'alumine (par exemple les bauxites ou autre sous-produit de fabrication contenant de l'alumine). Trois exemples de clinkers alumineux sont donnés dans le tableau 1 ci-dessous, les compositions étant données en pourcentage massique.

**Tableau 1**

| | Clinker Ciment fondu | Clinker alumineux 40% alumine | Clinker alumineux 80% alumine |
|---|---|---|---|
| **CaO** | 37-39 | 42-48 | 17-20 |
| **SiO₂** | 3-5 | 5-8 | <0.4 |
| **Al₂O₃** | 38-40 | 40-45 | 79-82 |
| **Fe₂O₃** + **FeO** | 15-18 | <10 | <0.2 |
| **SO₃** | <0,2 | <0,2 | <0.2 |
| **Na₂O** + **K₂O** | <0.4 | <0.4 | <0.7 |
| **MgO** | <1.5 | <1.5 | <0.2 |
| **TiO₂** | 2-4 | ^{~}2 | <0.1 |

Par clinker sulfoalumineux, il faut comprendre tout matériau résultant de la cuisson à une température comprise entre 900°C et 1350°C ("clinkérisation") de mélanges contenant au moins une source de chaux (par exemple les calcaires qui ont une teneur en CaO variant entre 50 % et 60 %), au moins une source d'alumine (par exemple les bauxites ou autre sous-produit de fabrication contenant de l'alumine), et au moins une source de sulfate (gypse, gypses chimiques, plâtre, anhydrite naturelle ou synthétique, cendres sulfocalciques). Le clinker sulfoalumineux utilisé dans la présente invention présente une teneur en 4CaO.3Al₂O₃.SO₃ (noté ci-aprèsC₄A₃S̅) supérieure à 30%. Un clinker sulfoalumineux selon l'invention peut présenter une analyse élémentaire et des constituants principaux dans les proportions telles que définies respectivement dans les tableaux 2 et 3. Trois exemples de clinkers sulfoalumineux utilisables dans la présente invention (Clinker 1 à 3) sont également présentés dans les tableaux 2 et 3 ci-après.

**Tableau 2**

| Oxyde | Clinker 1 | Clinker 2 | Clinker 3 |
|---|---|---|---|
| SiO₂ | ≤10.0% | 3,6% | 7,6% |
| Al₂O₃ | ≥32.0% | 45,3% | 27,9% |
| Fe₂O₃ | 1.5-3.5% | 0,9% | 7,0% |
| CaO | 43.5-45.5% | 37,0% | 45,1% |
| SO₃ | 8.0-9.5% | 7,8% | 7,9% |
| TiO₂ | 1.0-2.0% | 2,6% | 2,2% |
| MgO | ≤3.5% | | |
| Autres | 0-5% | 2,8% | 2,3% |

**Tableau 3**

| Constituant | Clinker1 | Clinker 2 | Clinker 3 |
|---|---|---|---|
| C₄A₃S̅ | 65% | 60% | 47% |
| CA, CA₂, C₁₂A₇ | - | 14% | - |
| C₂S | 25% | - | 22% |
| C₂AS | - | 17% | - |
| CS̅ | - | - | 3% |
| C₄AF | 5.5% | 3% | 22% |
| CT | 2.5% | 4% | 4% |
| Autres | 2% | 2% | 2% |

La présence de chaux libre CaO peut être tolérée jusqu'à 10 % dans le clinker sulfoalumineux sans nuire aux propriétés d'usage du liant utilisé dans le cadre de la présente invention. Cette présence peut se produire lorsque, par exemple, le clinker est obtenu par cuisson à relativement basse température.

La teneur en clinker alumineux et/ou sulfoalumineux peut varier de préférence de 10 à 50 %, voire de 15 à 40 % en poids dans le liant.

Lorsque la finesse (surface spécifique Blaine) du clinker alumineux et/ou sulfoalumineux se situe entre 2500 cm²/g et 7000 cm²/g, et particulièrement entre 3500 et 6500 cm²/g, la cinétique d'hydratation du liant n'est pas significativement modifiée, et permet d'obtenir une prise et un durcissement rapides.

S'agissant de la source de sulfate, celle-ci peut être choisie indifféremment parmi le gypse (ou gypses chimiques), le plâtre, ou l'anhydrite (naturelle ou non), ou encore les cendres sulfocalciques, le plâtre étant préféré. La teneur en SO₃ provenant de la source de sulfate peut aller jusqu'à 10 % en poids par rapport au liant total (ce qui correspond par exemple à une teneur en plâtre jusqu'à 20 % par rapport au liant total). Avantageusement, l'apport en sulfate par la source de sulfate de calcium est tel que le rapport massique r est compris entre 2 et 2,5, le rapport r étant défini par : r = [(SO₃)a + (SO₃)_{b}] / (SO₃)_{c} ; dans laquelle (SOs)a est la teneur en sulfate provenant de la source de sulfate de calcium, (SO₃)_{b} est la teneur en sulfate libre provenant du clinker sulfoalumineux, et (SO₃)_{c} est la teneur en sulfate provenant du sulfoaluminate de calcium présent dans le clinker sulfoalumineux. Une composition privilégiée correspond à un apport en sulfate tel que le rapport massique r soit voisin de 2. C'est précisément dans ce cas que les conditions stoechiométriques de formation de l'ettringite sont respectées :

C₄A₃S̅ + 2CS̅ H_{0,5} + 37H → C₆AS̅ ₃H₃₂ +2AH₃

Cette composition privilégiée permet de garantir une durabilité accrue des plaques. En effet, l'absence de sulfate conduit à la formation de monosulfoaluminate de calcium CA₄S̅H_{X} instable vis à vis par exemple des eaux sulfatées conduisant a posteriori à la formation d'ettringite expansive. A contrario, un excès de sulfate peut conduire à une instabilité des produits minces vis à vis de l'humidité.

Si on privilégie les résistances mécaniques à très court terme, le sulfate préféré de l'invention est le plâtre. Si l'on privilégie la plasticité, le sulfate préféré est l'anhydrite.

La plaque obtenue par le procédé selon l'invention peut comprendre de 30 à 60 % en poids de granulats. Les granulats sont en général choisis parmi les granulats légers afin d'alléger la plaque et d'obtenir une densité finale de l'ordre de 0,8 à 1,5, de préférence voisine de 1. Ils peuvent comprendre des charges minérales telles que du sable et/ou des matériaux naturels expansibles, expansés ou non, et/ou des charges organiques telles que des billes de polystyrène expansées, et/ou des charges inorganiques telles que de la perlite expansée éventuellement hydrophobe, de la vermiculite, de l'argile expansée, des billes de verre expansé, des microsphères creuses de verre, des cénosphères, des argiles expansées, des schistes expansés, des pierres ponces, des silicates expansés. Les granulats ont généralement une taille inférieure ou égale à 5 mm, voire même inférieure ou égale à 1 mm.

La plaque peut également comprendre de 0 à 10 % en poids, de préférence de 0,4 à 7% en poids, d'adjuvants. Les adjuvants peuvent être par exemple des agents rhéologiques (plastifiants - dont les plastifiants réducteurs d'eau - ou épaississants), des agents régulateurs de prise (accélérateur ou retardateurs), des agents rétenteurs d'eau, des agents entraîneurs d'air, des agents épaississants, des agents moussants, des agents de protection de croissance de micro-organismes et/ou de bactéries, des agents dispersants, des pigments, des agents hydrofugeants, des agents anti-feu, des agents de renforcement.

Par (super) plastifiant, il faut comprendre tout composé organique capable d'améliorer la capacité de mise en oeuvre (ou ouvrabilité) du mélange comprenant le liant hydraulique. Il peut aussi dans le cas de la présente invention permettre une réduction d'eau significative, à ouvrabilité constante, qui contribue à l'obtention de performances mécaniques plus élevées, pour la confection de plaques légères. Il peut s'agir de produits à base d'acides polycarboxyliques et de préférence d'éthers polycarboxyliques, des lignosulphonates, des polynaphtalènes sulphonates, des produits à base de mélamines, des polyacrylates et/ou des copolymères vinyliques.

Selon la norme EN 934-2:1997, un adjuvant réducteur d'eau permet de réduire la quantité d'eau nécessaire d'au moins 5 % par rapport à une composition non adjuvantée, et un adjuvant haut réducteur d'eau permet de réduire la quantité d'eau nécessaire d'au moins 12 % par rapport à une composition non adjuvantée. Les agents (super) plastifiants (haut) réducteur d'eau utilisés peuvent être des sels alcalins (Li, Na, K) ou alcalino-terreux (Ca, Mg) issus de la condensation entre l'acide a-naphtalène sulfonique et le formaldéhyde (type Cimfluid 230 ou 232 (Axim, Ciments Calcia), entre la mélamine sulfonée et le formaldéhyde (type Cimfluid ML, Sika) ou de lignosulfonates. Ils peuvent être également à base de polycarboxylates. Un exemple d'agent plastifiant réducteur d'eau est le sel alcalin ou alcalino-terreux issu de la condensation entre la mélamine sulfonée et le formaldéhyde (type Cimfluid ML) qui permet d'obtenir une fluidité élevée et ne provoque pas de retard de prise significatif malgré les dosages élevés utilisés.

Les agents plastifiants sont utilisés typiquement dans des teneurs inférieures ou égales à 10 %, de préférence variant de 0,4 à 7 %, en poids par rapport au poids total de liant.

Comme on le sait, de manière générale, est considéré comme retardateur de prise tout composé minéral ou organique permettant d'allonger significativement le temps de prise de la formulation comprenant le liant sans pénaliser sa rhéologie. L'intérêt d'un tel adjuvant réside dans la possibilité de contrôler la prise de la formulation et de la retarder éventuellement, pour faciliter une bonne mise en oeuvre. Des retardateurs préférés sont l'acide citrique, les gluconates ou encore les polyacrylates ou poly(méth)acrylates qui apportent en outre une nette amélioration de l'ouvrabilité de la pâte. Les poly(méth)acrylates préférés pour la composition selon l'invention sont les fluidifiants à base acrylate décrits dans le brevet FR 2815342, et en particulier le Cimfluid 2000 AC (Ciments Calcia) qui comprend un poly(oxyde d'éthylène) de faible masse et un copolymère de méthacrylate de sodium et de méthacrylate de poly(oxyde d'éthylène).

Les retardateurs sont avantageusement utilisés dans de teneurs allant jusqu'à 2 % en poids par rapport au poids total de liant.

L'utilisation de la combinaison d'un superplastifiant et un deuxième adjuvant, à savoir un retardateur, permet grâce au premier, d'obtenir une fluidité élevée lors de la mise en oeuvre sans pour autant accroître le temps de prise, et grâce au second, de retarder le temps de prise et d'améliorer son comportement rhéologique. En outre, la variation des proportions relatives de ces deux types d'adjuvants précités permet de disposer d'un moyen de contrôle de la durée d'utilisation de ladite composition sans pénaliser l'ouvrabilité initiale, ni la vitesse de durcissement.

Un accélérateur de durcissement peut également être utilisé pour ajuster la cinétique de durcissement de la plaque. Celui-ci peut être par exemple un carbonate alcalin, un sulfate alcalin ou un sulfate métallique, le carbonate de lithium (Li₂CO₃) ou le sulfate d'aluminium étant préférés .

L'étape de mise en forme b) du procédé de l'invention peut être réalisée par moulage. Elle comprend alors, le dépôt de la gâchée dans un moule et le démoulage de la plaque après durcissement suffisant de la gâchée. En variante, l'étape de mise en forme b) comprend :
b1) le dépôt de la gâchée sur un support défilant, lequel est entraîné en continu par un convoyeur à bande ;
b2) la mise en forme du corps de la plaque par un rouleau formeur ou une extrudeuse ; et
b3) la découpe de la plaque à la longueur souhaitée.

Ce dernier mode de réalisation présente comme principal avantage d'être réalisable en continu. Le liant utilisé dans le procédé selon l'invention permet en effet de préparer une gâchée possédant une ouvrabilité initiale élevée, un temps de prise limité et un durcissement rapide autorisant la manipulation immédiate des plaques à l'issue de la période de prise. Le procédé permet par conséquent la fabrication d'un grand nombre de plaques en un temps limité. Les coûts de production de telles plaques sont considérablement réduits.

Il est bien évident que la formulation idéale de la gâchée résulte d'un compromis entre le dosage en eau, la teneur en (super) plastifiant (haut) réducteur d'eau et la teneur en retardateur, de façon à obtenir l'ouvrabilité, le temps d'utilisation et les performances mécaniques souhaitées. Le rapport pondéral eau/liant utilisé est généralement compris entre 0,2 et 0,5. Au-delà de cette valeur les performances mécaniques chutent de façon vertigineuse. Pour un rapport pondéral eau/liant inférieur à 0,2, il n'y a pas suffisamment d'eau pour satisfaire les réactions d'hydratation du liant ; il peut subsister alors du liant anhydre qui peut nuire à la durabilité du matériau en milieu humide. De façon préférentielle, le rapport eau/liant utilisé est compris entre 0,25 et 0,47.

Une mousse, obtenue par exemple à partir d'un agent moussant, peut être ajoutée à la gâchée afin de réduire la densité finale de la plaque. Pour les mêmes raisons, un agent entraîneur d'air peut également être ajouté à la gâchée. De manière avantageuse, l'agent moussant ou l'agent entraîneur d'air renferme un tensio-actif, compatible avec un pH de 10 à 14. Ce tensio-actif est par exemple un composé à base de sels d'acide gras, ou d'alkyles sulfonates ou de résine vinsol.

Lorsque la gâchée comprend des granulats légers et/ou de la mousse, il est possible d'obtenir un corps de plaque présentant une densité finale de l'ordre de 0,8 à 1,5, de préférence voisine de 1, tout en présentant des performances de résistance mécanique à la compression et à la flexion élevées.

Il est également possible de réaliser le dépôt selon l'étape b1) sur un parement dit inférieur, qui augmente considérablement la résistance à la flexion des plaques. Ainsi, la plaque comprend avantageusement un parement sur une de ses faces, voire sur chacune de ses faces. Le parement peut être en forme de grille de préférence associé à un mat. La grille ainsi que le mat sont de préférence en fibres de verre.

Avantageusement, une première couche de gâchée plus dense peut être déposée sur le parement avant l'étape b1) afin d'obtenir des plaques présentant une zone densifiée, de faible épaisseur, afin d'améliorer les propriétés mécaniques des plaques.

Pour la mise en forme du corps de la plaque à l'étape b2), l'extrudeuse utilisée est de préférence du genre comportant une filière transversale d'extrusion, ladite filière étant au moins en partie soumise à vibrations. Pour ce faire, la filière est munie d'une lèvre supérieure et d'une lèvre inférieure qui porte avantageusement au moins un vibreur, de préférence deux, sur sa face inférieure ; l'axe du (ou des) vibreur (s) est orientable horizontalement et/ou verticalement la distance entre les lèvres supérieure et inférieure de la filière est réglable les lèvres supérieure et inférieure sont les lames d'une extrudeuse ou les rouleaux d'un rouleau formeur. Avantageusement, la filière d'extrusion a la forme générale d'un rectangle dont les extrémités des longueurs se faisant face se rapprochent légèrement l'une de l'autre ; dès lors, deux des bords latéraux parallèles d'une plaque obtenue à partir d'une telle extrudeuse sont légèrement amincis.

A l'étape b3), la découpe est avantageusement une découpe au jet d'eau, laquelle est propre et nette.

Les plaques ainsi fabriquées sont également résistantes aux intempéries et au brouillard salin. Elles sont ainsi particulièrement adaptées pour être utilisées dans le secteur du bâtiment, pour former ou recouvrir des parois, planchers ou toitures, à l'intérieur ou à l'extérieur des bâtiments, et notamment dans des atmosphères très humides ou des zones fréquemment lavées au jet d'eau telles que les cuisines industrielles, les laboratoires agro-alimentaires, les douches ou salles de bains, les bassins, les piscines, les salles de bâtiments agricoles ou de boucheries industrielles.

De telles plaques peuvent également être utilisées pour former ou recouvrir des parois, planchers ou toitures exposés à un brouillard salin.

Les exemples suivants illustrent l'invention sans en limiter la portée.

### EXEMPLES :

Une plaque obtenue par le procédé selon l'invention (Ex1) et une plaque de référence (C1) ont été préparées à partir respectivement d'un liant hydraulique à base de laitier et d'un liant hydraulique à base de ciment. Les compositions des gâchées, en pourcentage pondéral, sont présentées dans le tableau 4 ci-dessous :

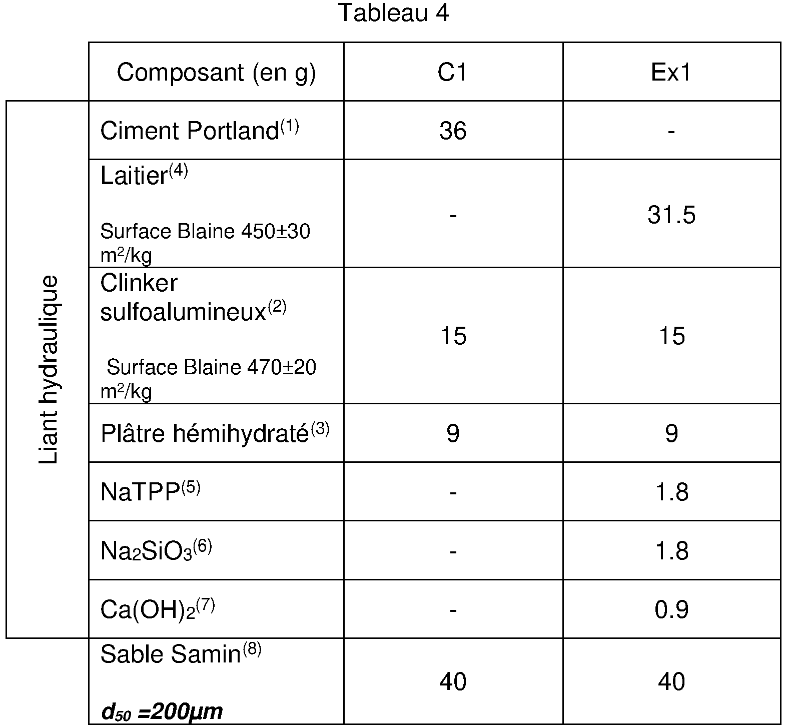

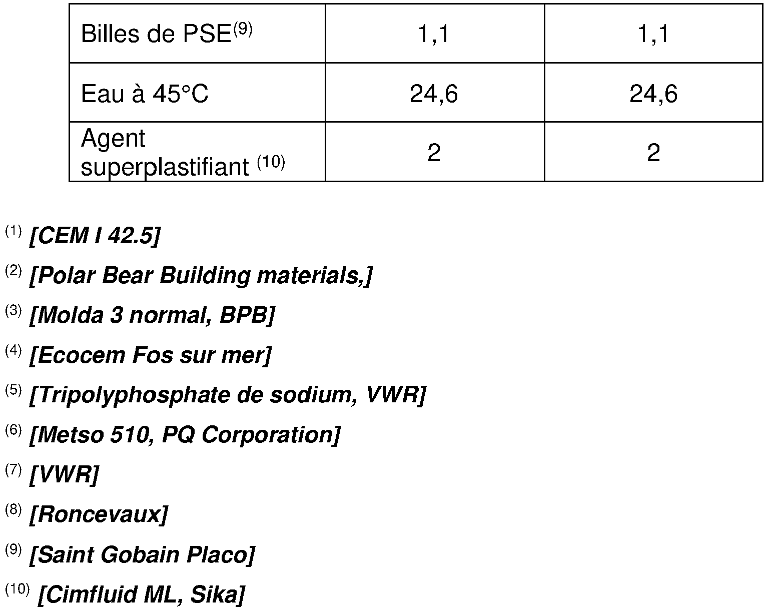

Elles sont obtenues en effectuant un pré-mélange de l'ensemble des constituants solides d'une part et de l'agent superplastifiant avec l'eau de gâchage préchauffée à 45°C d'autre part. Dans un mélangeur de type Kenwood d'une capacité de 5 litres, les constituants liquides sont mélangées avec les constituants solides, à une vitesse minimale pendant une durée de 5 secondes. La vitesse de malaxage est ensuite augmentée par palier chaque 5 secondes jusqu'à maintenir à la vitesse finale maximale pendant une durée de 1 min.

Les mesures effectuées sur ces compositions sont les suivantes :
Mesure du temps de prise : Le temps de prise est évalué à partir de l'enfoncement d'une aiguille Vicat dans la pâte obtenue après gâchage, selon la norme NF EN 196-3 pour mortiers. La mesure de l'évolution du taux d'enfoncement est caractéristique de l'évolution du durcissement et de la prise du matériau.

Résistance mécanique à la flexion et à la compression : elles sont effectuées sur des éprouvettes (4x4x16) cm³, après 24 heures, selon la norme NF EN 196-1.

Les résultats sont présentés dans le tableau 5 ci-dessous :

**Tableau 5**

| | C1 | Ex1 |
|---|---|---|
| Début de prise (min) | 4,5 | 5 |
| Fin de prise (min) | 9 | 9 |
| Flexion à 24 h (MPa) | 1,5 | 1,25 |
| Compression à 24 h (MPa) | 6,5 | 5 |

## Revendications

1. Procédé de fabrication d'une plaque, comprenant :
- a) la préparation d'une gâchée, ladite gâchée comprenant, par rapport au total de matière sèche, 50 à 70 % en poids d'un liant hydraulique, 30 à 60 % en poids de granulats et 0 à 10 % en poids d'adjuvants, et le rapport pondéral eau/liant dans la gâchée étant compris entre 0,2 et 0,5 ;
- b) la mise en forme ou formation du corps de la plaque à partir de ladite gâchée ;
**caractérisé en ce que** le liant hydraulique comprend :
- 20 à 80 % en poids d'un composé solide minéral constitué d'au moins un mélange de silice, d'alumine et d'oxydes alcalino-terreux, la somme totale de CaO et MgO représentant au moins 10% en poids du composé solide minéral ;
- 5 à 70 % en poids d'un clinker alumineux et/ou sulfoalumineux ;
- 5 à 20 % en poids d'un une source de sulfate de calcium ; et
- 2 à 15 % en poids d'un système d'activation consistant en un mélange de 30 à 70 % en poids d'un sel dérivé de l'acide phosphorique, 10 à 50 % en poids d'un silicate d'un métal alcalin, et 10 à 50 % en poids d'une source de métal alcalinoterreux.

2. Procédé selon la revendication 1, **caractérisé en ce que** le liant hydraulique ne comprend pas de ciment de type Portland.

3. Procédé selon la revendication 1 ou 2, **caractérisé en ce que** ledit sel dérivé de l'acide phosphorique est choisi parmi les polyphosphates d'un métal alcalin choisi parmi le sodium, le potassium ou le lithium et leurs mélanges, notamment un diphosphate ou un triphosphate de métal alcalin tel que le triphosphate de sodium de formule Na₅P₃O₁₀.

4. Procédé selon l'une des revendications 1 à 3, **caractérisé en ce que** ledit sel est un triphosphate ou un diphosphate d'un métal alcalin.

5. Procédé selon l'une des revendications 1 à 4, **caractérisé en ce que** le silicate d'un métal alcalin est un silicate d'un métal alcalin choisi parmi le potassium, le lithium et/ou le sodium.

6. Procédé selon l'une des revendications 1 à 5, **caractérisé en ce que** la source d'un métal alcalinoterreux est choisie parmi la chaux et/ou les sels de calcium.

7. Procédé selon la revendication 6, **caractérisé en ce que** la source de métal alcalinoterreux est une source de calcium, de préférence choisie parmi l'hydroxyde de calcium, le nitrate de calcium et/ou le chlorure de calcium.

8. Procédé selon l'une des revendications 1 à 7, **caractérisé en ce que** le système d'activation représente entre 3 et 12% du poids total du liant hydraulique.

9. Procédé selon l'une des revendications 1 à 8, **caractérisé en ce que** la somme totale de CaO et MgO dans le composé solide minéral représente au moins 20% en poids de celui-ci.

10. Procédé selon l'une des revendications 1 ou 9, **caractérisé en ce que** le composé solide minéral est choisi parmi les laitiers, amorphes ou cristallisés, les cendres volantes et/ou les poudres de verre, tels que les laitiers d'aciérie, les laitiers de hauts-fourneaux ou les cendres volantes de classe C.

11. Procédé selon l'une des revendications 1 à 10, **caractérisé en ce que** la source de sulfate de calcium est du plâtre, du gypse ou de l'anhydrite.

12. Procédé selon l'une des revendications 1 à 11, **caractérisé en ce que** la gâchée comprend, par rapport au total de matière sèche, 0,4 à 7 % en poids d'adjuvants tels que des agents rhéologiques tels que des plastifiants dont les plastifiants réducteurs d'eau ou épaississants, des agents régulateurs de prise tels que des accélérateurs et/ou retardateurs, des agents rétenteurs d'eau, des agents entraîneurs d'air, des agents épaississants, des agents moussants, des agents de protection de croissance de micro-organismes et/ou de bactéries, des agents dispersants, des pigments, des agents hydrofugeants, des agents anti-feu, des agents de renforcement.

13. Procédé selon l'une des revendications 1 à 12 **caractérisé en ce que** lesdits granulats sont choisis parmi le sable et/ou les matériaux naturels expansibles, expansés ou non, et/ou des charges organiques telles que des billes de polystyrène expansées, et/ou des charges inorganiques telles que de la perlite expansée éventuellement hydrophobe, de la vermiculite, de l'argile expansée, des billes de verre expansé, des microsphères creuses de verre, des cénosphères, des argiles expansées, des schistes expansés, des pierres ponces, des silicates expansés.

## Patentansprüche

1. Verfahren zum Herstellen einer Platte, umfassend:
- a) das Zubereiten einer Mischung, die Mischung umfassend, im Verhältnis zu der Gesamttrockenmasse, zu 50 bis 70 Gew.-% ein hydraulisches Bindemittel, zu 30 bis 60 Gew.-% Zuschlagstoffe und zu 0 bis 10 Gew.-% Zusatzstoffe, und wobei das Gewichtsverhältnis Wasser/Bindemittel in der Mischung zwischen 0,2 und 0,5 liegt;
- b) das Formen oder Ausbilden des Körpers der Platte aus der Mischung;
**dadurch gekennzeichnet, dass** das hydraulische Bindemittel umfasst:
- zu 20 bis 80 Gew.-% eine feste mineralische Verbindung, die aus mindestens einem Gemisch aus Siliciumdioxid, Aluminiumoxid und Erdalkalioxiden besteht, wobei die Gesamtsumme von CaO und MgO mindestens zu 10 Gew.-% die feste mineralische Verbindung ausmacht;
- zu 5 bis 70 Gew.-% einen aluminiumhaltigen und/oder sulfoaluminiumhaltigen Klinker;
- zu 5 bis 20 Gew.-% eine Calciumsulfatquelle; und
- zu 2 bis 15 Gew.-% ein Aktivierungssystem, das aus einem Gemisch aus zu 30 bis 70 Gew.-% ein Salz, das von Phosphorsäure abgeleitet ist, zu 10 bis 50 Gew.-% ein Alkalimetallsilicat und zu 10 bis 50 Gew.-% eine Erdalkalimetallquelle besteht.

2. Verfahren nach Anspruch 1, **dadurch gekennzeichnet, dass** das hydraulische Bindemittel kein Zement des Portlandtyps umfasst.

3. Verfahren nach Anspruch 1 oder 2, **dadurch gekennzeichnet, dass** das Salz, das von Phosphorsäure abgeleitet ist, aus Polyphosphaten eines Alkalimetalls ausgewählt ist, das aus Natrium, Kalium oder Lithium und ihren Gemischen ausgewählt ist, insbesondere ein Alkalimetalldiphosphat oder -triphosphat wie Natriumtriphosphat von Formel Na₅P₃O₁₀.

4. Verfahren nach einem der Ansprüche 1 bis 3,
**dadurch gekennzeichnet, dass** das Salz ein Diphosphat oder Triphosphat eines Alkalimetalls ist.

5. Verfahren nach einem der Ansprüche 1 bis 4,
**dadurch gekennzeichnet, dass** das Silicat eines Alkalimetalls ein Silicat eines Alkalimetalls ist, das aus Kalium, Lithium und/oder Natrium ausgewählt ist.

6. Verfahren nach einem der Ansprüche 1 bis 5,
**dadurch gekennzeichnet, dass** die Quelle eines Erdalkalimetalls aus Kalk und/oder Calciumsalzen ausgewählt ist.

7. Verfahren nach Anspruch 6, **dadurch gekennzeichnet, dass** die Erdalkalimetallquelle eine Calciumquelle ist, die vorzugsweise aus Calciumhydroxid, Calciumnitrat und/oder Calciumchlorid ausgewählt ist.

8. Verfahren nach einem der Ansprüche 1 bis 7,
**dadurch gekennzeichnet, dass** das Aktivierungssystem zu zwischen 3 und 12 % des Gesamtgewichts das hydraulische Bindemittel ausmacht.

9. Verfahren nach einem der Ansprüche 1 bis 8,
**dadurch gekennzeichnet, dass** die Gesamtsumme von CaO und MgO in der festen mineralischen Verbindung mindestens 20 Gew.-% davon ausmacht.

10. Verfahren nach einem der Ansprüche 1 oder 9,
**dadurch gekennzeichnet, dass** die feste mineralische Verbindung aus amorphen oder kristallisierten Schlacken, Flugaschen und/oder Glaspulvern wie Stahlwerksschlacken, Hochofenschlacken oder Flugaschen von Klasse C ausgewählt ist.

11. Verfahren nach einem der Ansprüche 1 bis 10,
**dadurch gekennzeichnet, dass** die Calciumsulfatquelle Putz, Gips oder Anhydrit ist.

12. Verfahren nach einem der Ansprüche 1 bis 11,
**dadurch gekennzeichnet, dass** die Mischung im Verhältnis zu der Gesamttrockenmasse zu 0,4 bis 7 Gew.-% Zusatzstoffe wie Rheologiemittel wie Weichmacher, darunter wasserreduzierende oder verdickende Weichmacher, Abbinderegler wie Beschleuniger und/oder Verzögerer, Wasserretentionsmittel, Luftporenbildner, Verdickungsmittel, Schaumbildner, Mittel zum Schutz vor einem Wachstum von Mikroorganismen und/oder Bakterien, Dispergiermittel, Pigmente, wasserabweisende Mittel, Feuerschutzmittel, Verstärkungsmittel umfasst.

13. Verfahren nach einem der Ansprüche 1 bis 12,
**dadurch gekennzeichnet, dass** die Zuschlagstoffe aus Sand und/oder expandierbaren, expandierten oder nicht expandierten natürlichen Materialien und/oder organischen Füllstoffen wie expandierten Polystyrolkugeln und/oder anorganischen Füllstoffen wie expandiertem, gegebenenfalls hydrophobem Perlit, Vermiculit, Blähton, expandierten Glaskugeln, Glasmikrohohlkugeln, Cenosphären, Blähtonen, expandierten Schiefern, Bimssteinen, expandierten Silicaten ausgewählt werden.

## Claims

1. Process for manufacturing a board, comprising:
- a) preparing a batch, said batch comprising, relative to the total dry matter, 50 to 70% by weight of a hydraulic binder, 30 to 60% by weight of aggregates and 0 to 10% by weight of admixtures, and the water/binder weight ratio in the batch being between 0.2 and 0.5;
- b) shaping or forming the body of the board from said batch;
**characterized in that** the hydraulic binder comprises:
- 20 to 80% by weight of a solid mineral compound consisting of at least a mixture of silica, alumina and alkaline earth oxides, the total sum of CaO and MgO representing at least 10% by weight of the solid mineral compound;
- 5 to 70% by weight of a high-alumina and/or sulfoaluminate clinker;
- 5 to 20% by weight of a calcium sulfate source; and
- 2 to 15% by weight of an activation system consisting of a mixture of 30 to 70% by weight of a salt derived from phosphoric acid, 10 to 50% by weight of a silicate of an alkali metal, and 10 to 50% by weight of an alkaline earth metal source.

2. Process according to claim 1, **characterized in that** the hydraulic binder does not comprise cement of Portland type.

3. Process according to claim 1 or 2, **characterized in that** said salt derived from phosphoric acid is selected from polyphosphates of an alkali metal selected from sodium, potassium or lithium and mixtures thereof, in particular an alkali metal diphosphate or triphosphate such as sodium triphosphate of formula Na₅P₃O₁₀.

4. Process according to any of claims 1 to 3, **characterized in that** said salt is a triphosphate or a diphosphate of an alkali metal.

5. Process according to any of claims 1 to 4, **characterized in that** the silicate of an alkali metal is a silicate of an alkali metal selected from potassium, lithium and/or sodium.

6. Process according to any of claims 1 to 5, **characterized in that** the source of an alkaline earth metal is selected from lime and/or calcium salts.

7. Process according to claim 6, **characterized in that** the alkaline earth metal source is a calcium source, preferably selected from calcium hydroxide, calcium nitrate and/or calcium chloride.

8. Process according to any of claims 1 to 7, **characterized in that** the activation system represents between 3 and 12% of the total weight of the hydraulic binder.

9. Process according to any of claims 1 to 8, **characterized in that** the total sum of CaO and MgO in the solid mineral compound represents at least 20% by weight thereof.

10. Process according to any of claims 1 or 9, **characterized in that** the solid mineral compound is chosen from amorphous or crystallized slags, fly ash and/or glass powders, such as steelworks slags, blast furnace slags or class C fly ash.

11. Process according to any of claims 1 to 10, **characterized in that** the source of calcium sulfate is plaster, gypsum or anhydrite.

12. Process according to any of claims 1 to 11, **characterized in that** the batch comprises, relative to the total dry matter, 0.4 to 7% by weight of admixtures such as rheological agents, such as plasticizers, including water-reducing plasticizers or thickeners, setting regulating agents such as accelerators and/or retarders, water-retaining agents, air-entraining agents, thickeners, foaming agents, agents for protecting against the growth of microorganisms and/or bacteria, dispersants, pigments, water-repellent agents, flame retardants or reinforcing agents.

13. Process according to any of claims 1 to 12 **characterized in that** said aggregates are selected from sand and/or expandable natural materials, which are or are not expanded, and/or organic fillers such as expanded polystyrene beads, and/or inorganic fillers such as expanded perlite, which is optionally hydrophobic, vermiculite, expanded clay, expanded glass beads, hollow glass microspheres, cenospheres, expanded clays, expanded schists, pumice stones or expanded silicates.
